# EUROPÄISCHE PATENTSCHRIFT

(11) **EP 1 666 325 B1**
(45) Veröffentlichungstag und Bekanntmachung des Hinweises auf die Patenterteilung: **09.04.2008**
(21) Anmeldenummer: 05025835.9
(22) Anmeldetag: 26.11.2005
(51) Int. Cl.: B60T 11/232

(54) **Hydraulikzylinder, insbesondere Hauptbremszylinder für hydraulische Bremsanlagen**
Hydraulic cylinder, in particular main cylinder for hydraulic brake system
Cylindre hydraulique, notamment maître cylindre pour système de freinage hydraulique

(30) Priorität: 26.11.2004 DE 102004057374
(43) Veröffentlichungstag der Anmeldung: 07.06.2006
(73) Patentinhaber: FTE automotive GmbH, 96106 Ebern (DE)
(72) Erfinder: Graner, Rudolf, 97469 Gochsheim (DE); Seidl, Rolf, 97461 Rügheim (DE); Martin, Wolfgang, 96184 Rentweinsdorf (DE); Peuker, Karl, 96106 Ebern (DE); Wächter, Frank, 96179 Rattelsdorf (DE)
(74) Vertreter: Oppermann, Mark

(56) Entgegenhaltungen:
- DE-A1- 4 202 217
- US-A- 4 753 075
- US-A- 6 065 292
- US-B1- 6 434 931

## Beschreibung

Die Erfindung bezieht sich auf einen Hydraulikzylinder gemäß dem Oberbegriff des Patentanspruchs 1. Insbesondere bezieht sich die Erfindung auf einen Hauptbremszylinder für hydraulische Bremsanlagen, wie sie massenweise in der Automobilindustrie zum Einsatz kommen.

### STAND DER TECHNIK

Insbesondere in Bremsanlagen mit einer automatischen Regelung der Bremskräfte derart, daß ein Blockieren der Räder beim Bremsen verhindert wird (ABS: Anti-Blockier-System), haben sich zur Erzeugung des hydraulischen Drucks, mit dem die hydraulischen Zuspannelemente an den Radbremsen beaufschlagt werden, im Stand der Technik Hauptbremszylinder durchgesetzt, die pro Bremskreis ein sogenanntes Zentralventil aufweisen. Das Zentralventil ersetzt funktional die Ausgleichsbohrung, d.h. es sorgt bei unbetätigter Bremse für eine Verbindung zwischen Ausgleichsbehälter und Zylinderdruckraum und bei betätigter Bremse für eine Unterbrechung dieser Verbindung, ohne die mit der Ausgleichsbohrung verbundenen Probleme. Bei Hauptbremszylindern mit Ausgleichsbohrungen kann bei bestimmten ABS-Regelzyklen die Ausgleichsbohrung nämlich mehrfach schnell von den Primärnutringen überfahren werden, wobei dann, durch den noch anstehenden Druck, die Gefahr einer Beschädigung des Primärnutrings besteht. Durch die Verwendung eines Hauptbremszylinders mit Zentralventil und ohne Ausgleichsbohrung wird diese Art von Beschädigung vermieden.

So offenbart die DE-U-94 21 291 einen Tandem-Hauptbremszylinder mit einem Zylindergehäuse, in dem ein Primär- und ein Sekundärkolben längsverschieblich hintereinander angeordnet sind, die jeweils eine Druckkammer variabel begrenzen und jeweils ein Zentralventil aufweisen. Das Zentralventil ist in einer Ruhestellung des jeweiligen Kolbens geöffnet, um die vom jeweiligen Kolben begrenzte Druckkammer über einen Kolbenkanal mit einem Ausgleichs- und Nachlaufanschluß zu verbinden, und in einer Betätigungsstellung des jeweiligen Kolbens geschlossen, um besagte Verbindung zu unterbrechen. Hierbei weist das Zentralventil einen gegen einen Ventilsitz am jeweiligen Kolbenkanal federvorgespannten Ventilkörper auf, mit einem Ventilkopf und einem Stößel. Während der Ventilkopf mit Radialspiel in einer Aufnahmebohrung des jeweiligen Kolbens angeordnet ist, die stets mit der vom jeweiligen Kolben begrenzten Druckkammer kommuniziert, durchgreift der im jeweiligen Kolbenkanal radial geführte Stößel den Kolbenkanal und wirkt mit seinem über den Kolbenkanal vorstehenden Ende - im Falle des Primärkolbens mittelbar über einen Querstift und im Falle des Sekundärkolbens unmittelbar - mit einem zylindergehäusefesten Anschlag zusammen, um das Zentralventil in der Ruhestellung des jeweiligen Kolbens offen zu halten. Da die Querschnittsgestalt des Stößels prismatisch ist, während der jeweilige Kolbenkanal einen kreisrunden Querschnitt hat, kann in der geöffneten Stellung des Zentralventils die Hydraulikflüssigkeit von dem Ausgleichs- und Nachlaufanschluß neben dem Stößel durch den jeweiligen Kolbenkanal in die Aufnahmebohrung des jeweiligen Kolbens und damit die von diesem begrenzte Druckkammer fließen.

Ferner ist aus der gattungsbildenden US-A-6 434 931 ein Tandem-Hauptbremszylinder bekannt, mit Zentralventilen in den Kolben, bei denen ein Teil des zum Verschließen eines Kolbenkanals vorgesehenen Ventilkörpers als zum Druckraum hin offene Federaufnahme ausgebildet ist, welche außenumfangsseitig Führungsstege aufweist, über die der jeweilige Ventilkörper am Innenumfang der jeweils zugeordneten Aufnahmebohrung des entsprechenden Kolbens geführt ist. Die Federaufnahmen besitzen des weiteren Querbohrungen, über die der jeweilige Druckraum bei geöffnetem Zentralventil mit dem Kolbenkanal kommuniziert. Diese Querbohrungen liegen aus Richtung des Kolbenkanals gesehen hinter den Führungsstegen, so daß letztere bei geöffnetem Zentralventil und einer Hydraulikflüssigkeitsströmung im Kolbenkanal umströmt werden müssen.

Moderne Kraftfahrzeuge besitzen neben ABS zur Unterstützung des Fahrzeugführers in kritischen Situationen (Ausweichen, mangelhafte Bodenhaftung in Kurven, etc.) zunehmend weitere automatische Regelungen, die (auch) auf die hydraulische Bremsanlage Einfluß nehmen. Beispielhaft genannt seien hier ASR (Antriebsschlupfregelung) und ESP (elektronisches Stabilitätsprogramm). Das ASR-System mißt und vergleicht über Radsensoren die Geschwindigkeit der Antriebsräder und verhindert, daß diese durchdrehen. Wenn ein Rad durchzudrehen droht, wird es vom ASR-System u.a. solange gebremst, bis die Antriebsleistung der Haftung des Rads angepaßt ist. Bei ESP erkennt ein Sensor am Lenkrad die gewünschte Fahrtrichtung, andere im Kraftfahrzeug verteilte Sensoren messen die tatsächliche Fahrtrichtung. Das ESP-System vergleicht die gewünschte mit der tatsächlichen Fahrtrichtung und korrigiert letztere ggf. durch u.a. Betätigung der Bremsen. Gemein ist diesen weiteren automatischen Regelungen, daß eine Bremsenbetätigung erfolgt, ohne daß der Fahrzeugführer auf das Bremspedal tritt. Die hierfür benötigte Hydraulikflüssigkeitsmenge wird deshalb von einer Pumpeneinheit in die jeweils zu beaufschlagende(n) Radbremse(n) gepumpt. Diese Flüssigkeit wird in der Regel aus dem Leitungssystem der hydraulischen Bremsanlage entnommen, muß also vom Ausgleichsbehälter durch den Tandem-Hauptbremszylinder und damit durch die geöffneten Zentralventile nachfließen. Grundsätzlich ist es zwar auch möglich, die Pumpeneinheit unter Umgehung des Tandem-Hauptbremszylinders an den Ausgleichsbehälter anzuschließen, wie dies z.B. aus der DE-A-36 07 367 bekannt ist, dies ist jedoch mit einem erheblichen Mehraufwand mit zusätzlichen Ventilen und Druckleitungen verbunden.

Für einen Einsatz in einer solchen hydraulischen Bremsanlage, die (u.a.) zur Realisierung der ASR- und/oder ESP-Funktion eine Pumpeneinheit aufweist, welche Hydraulikflüssigkeit über den Tandem-Hauptbremszylinder aus dem Ausgleichsbehälter ansaugt, sind Tandem-Hauptbremszylinder, wie sie aus dem oben geschilderten Stand der Technik (DE-U-94 21 291, US-A-6 434 931) bekannt sind, nun nur bedingt geeignet. Insbesondere bestünde bei einem solchen Einsatz dieser Tandem-Hauptbremszylinder die Gefahr, daß das für die ASR- oder ESP-Regelung benötigte Volumen an Hydraulikflüssigkeit durch die geöffneten Zentralventile des Tandem-Hauptbremszylinders nicht schnell genug nachfließen kann.

### DARSTELLUNG DER ERFINDUNG

Der Erfindung liegt die Aufgabe zugrunde, einen gattungsgemäßen Hydraulikzylinder, insbesondere Hauptbremszylinder für hydraulische Bremsanlagen derart weiterzubilden, daß in der Ruhestellung des wenigstens einen das Zentralventil aufweisenden Kolbens der Widerstand möglichst gering ist, den die Hydraulikflüssigkeit zu überwinden hat, wenn sie vom Ausgleichs- und Nachlaufanschluß über das geöffnete Zentralventil in den Druckraum strömt.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 14.

Gemäß der Erfindung ist bei einem Hydraulikzylinder, insbesondere Hauptbremszylinder für hydraulische Bremsanlagen, der ein Zylindergehäuse hat, in dem wenigstens ein Kolben längsverschieblich geführt ist, der einen Druckraum variabel begrenzt und ein Zentralventil aufweist, das in einer Ruhestellung des Kolbens geöffnet ist, um den Druckraum über einen Kolbenkanal mit einem Ausgleichs- und Nachlaufanschluß zu verbinden, und in einer Betätigungsstellung des Kolbens geschlossen ist, um besagte Verbindung zu unterbrechen, wobei das Zentralventil einen gegen einen Dichtsitz am Kolbenkanal federvorgespannten, am Kolben geführten Ventilkörper mit einem in einer Aufnahmebohrung des Kolbens angeordneten Kopfteil und einem den Kolbenkanal durchgreifenden Ventilstößel aufweist, welcher mit einem zylindergehäusefesten Anschlag zusammenwirkt, um das Zentralventil in der Ruhestellung des Kolbens offen zu halten, und wobei der Kopfteil des Ventilkörpers als zum Druckraum offener Hohlkörper ausgebildet ist, der außenumfangsseitig einen Führungsabschnitt aufweist, über den der Ventilkörper am Innenumfang der Aufnahmebohrung des Kolbens geführt ist, der Ventilkörper zwischen dem Dichtsitz am Kolbenkanal und dem Führungsabschnitt des Kopfteils mit wenigstens einem Durchlaß versehen, über den der Druckraum bei geöffnetem Zentralventil mit dem Kolbenkanal kommuniziert.

Da somit der Kopfteil des Ventilkörpers mit seinem außenumfangsseitigen Führungsabschnitt am Innenumfang der Aufnahmebohrung des Kolbens geführt ist, ist eine Führung des Ventilkörpers über den Ventilstößel im Kolbenkanal, wie sie etwa beim Stand der Technik gemäß der DE-U-94 21 291 vorgesehen ist, nicht notwendig. Mithin können Ventilstößel und Kolbenkanal frei von Führungsaufgaben im Hinblick auf eine Maximierung des von der Hydraulikflüssigkeit durchströmbaren Querschnitts zwischen dem Außenumfang des Ventilstößels und dem Innenumfang des Kolbenkanals dimensioniert werden, wobei sich der minimale Durchmesser des Ventilstößels aus den mechanischen Festigkeitserfordernissen für den Ventilstößel ergibt, während der maximale Durchmesser des Kolbenkanals nur durch die radialen Abmessungen des Dichtsitzes begrenzt ist. Auch die radial äußere Lage des wenigstens einen Durchlasses zwischen dem Dichtsitz am Kolbenkanal und dem Führungsabschnitt des Kopfteils, über den der Druckraum bei geöffnetem Zentralventil mit dem Kolbenkanal kommuniziert, ist dem Erhalt eines geringen Strömungs- bzw. Durchflußwiderstands des Zentralventils förderlich, weil sie eine großzügige Querschnittsdimensionierung des Durchlasses ermöglicht. Im Ergebnis weist das erfindungsgemäß ausgebildete Zentralventil im geöffneten Zustand einen verglichen zum Stand der Technik deutlich geringeren Durchflußwiderstand auf, der hohe Volumendurchsätze in kurzer Zeit gestattet, was den vorgeschlagenen Hydraulikzylinder für den Einsatz in ASR- oder ESPgeregelten hydraulischen Bremsanlagen prädestiniert.

Es ist bevorzugt, wenn der Ventilstößel einen Schaftabschnitt hat, der einen Kreisquerschnitt aufweist und den zylindrischen Kolbenkanal mit radialem Abstand durchgreift, wodurch die radialen Abmessungen des Schaftabschnitts minimiert und der von der Hydraulikflüssigkeit durchströmbare Ringquerschnitt zwischen Schaftabschnitt und Innenumfang des Kolbenkanals gegenüber anderen, grundsätzlich ebenfalls denkbaren Querschnittsgeometrien maximiert ist.

Zweckmäßig kann der Kopfteil des Ventilkörpers einen mit dem Dichtsitz am Kolbenkanal zusammenwirkenden, kreisförmigen Bodenabschnitt aufweisen, an dem sich außenumfangsseitig der Führungsabschnitt des Kopfteils anschließt, der dem Bodenabschnitt angrenzend zur Bildung einer Mehrzahl von Durchlässen teilweise ausgespart ist. Wenn hierbei die Durchlässe gleichmäßig über dem Umfang des Bodenabschnitts verteilt sind, ist dies ebenfalls einem widerstandsarmen, schnellen Durchfluß der Hydraulikflüssigkeit durch das geöffnete Zentralventil förderlich.

Vorteilhaft kann sich des weiteren der wenigstens eine Durchlaß in axialer Richtung des Ventilkörpers mindestens über die halbe Länge des Kopfteils erstrecken, um den von der Hydraulikflüssigkeit durchströmbaren Querschnitt des Durchlasses auch in axialer Richtung des Ventilkörpers zu maximieren.

Im weiteren Verfolg des Erfindungsgedankens kann der Ventilstößel einen an dem Kopfteil des Ventilkörpers angrenzenden Bund mit einer Ableitfläche aufweisen, die stufenlos an dem den Kolbenkanal durchgreifenden Schaftabschnitt des Ventilstößels anschließt und deren Durchmesser sich in Richtung des Druckraums vergrößert. Eine solche Ableitfläche sorgt bei einem geöffneten, in Richtung des Druckraums durchströmten Zentralventil auf einfache Weise für eine Umlenkung der im Kolbenkanal zunächst axialen Strömung nach radial außen, zu dem wenigstens einen Durchlaß hin, ohne daß es dabei zu einer übermäßigen, eine schnelle Durchströmung des Zentralventils behindernden Verwirbelung der Hydraulikflüssigkeit kommt.

Grundsätzlich können Kopfteil und Ventilstößel des Ventilkörpers materialeinheitlich aus einem metallischen Werkstoff hergestellt sein. In einer insbesondere im Hinblick auf niedrige Herstellkosten besonders bevorzugten, alternativen Ausgestaltung des Ventilkörpers kann aber auch der Ventilstößel des Ventilkörpers aus einem metallischen Werkstoff bestehen, während der Kopfteil des Ventilkörpers aus Kunststoff besteht und an den Ventilstößel angespritzt ist. Wenn hierbei der Ventilstößel mit einer Profilierung versehen ist, an der der Kopfteil angespritzt ist, wird der Kopfteil auf einfache Weise auch formschlüssig am Ventilstößel gehalten.

Es ist ferner bevorzugt, wenn der wenigstens eine Kolben in einer ersten Zylinderbohrung des Zylindergehäuses aufgenommen ist, die an ihrem vom Druckraum abgewandten Ende mit dem Ausgleichs- und Nachlaufanschluß über eine zweite Zylinderbohrung verbunden ist, deren Durchmesser im wesentlichen dem Durchmesser der ersten Zylinderbohrung entspricht und die bezüglich der ersten Zylinderbohrung exzentrisch, zum Ausgleichs- und Nachlaufanschluß hin versetzt in das Zylindergehäuse eingebracht ist. Eine solche, mittels der zweiten Zylinderbohrung bewirkte Verbindung zum Ausgleichs- und Nachlaufanschluß hin läßt sich nicht nur besonders günstig mit dem Werkzeug ausbilden, mit welchem auch die erste Zylinderbohrung hergestellt wird, sondern sorgt darüber hinaus infolge des gewählten Durchmessers der zweiten Zylinderbohrung auch für einen großen, widerstandsarmen Durchströmquerschnitt. Aufgrund der Exzentrizität der zweiten Zylinderbohrung, d.h. deren bezüglich der ersten Zylinderbohrung zum in der Einbaulage des Hydraulikzylinders oben liegenden Ausgleichs- und Nachlaufanschluß hin versetzter Lage wird zudem in einem in der Einbaulage des Hydraulikzylinders unteren Bereich der ersten Zylinderbohrung vorteilhaft eine Stufe vermieden. Hinter einer solchen Stufe, wie sie z.B. beim Stand der Technik gemäß der DE-U-94 21 291 vorhanden ist, könnte sich der Querstift infolge eines ggf. abgebrochenen Ventilstößels des Ventilkörpers nämlich so verklemmen, daß der Hydraulikzylinder gänzlich blockiert wird.

Wenn es sich bei dem Hydraulikzylinder um einen Tandem-Hauptbremszylinder handelt, der in an sich bekannter Weise einen Primärkolben, einen Sekundärkolben und eine dazwischen angeordnete Kolbendruckfeder aufweist, die vermittels einer Fesseleinrichtung mit zwei teleskopartig ineinander verschiebbaren Verbindungsgliedern vorgespannt ist, um den Ansteuerweg des Tandem-Hauptbremszylinders zu minimieren und einen gleichzeitigen Druckaufbau in beiden Bremskreisen zu gewährleisten (Tandem-Hauptbremszylinder mit gefesselter Kolbenfeder), kann des weiteren die Fesseleinrichtung von der Hydraulikflüssigkeit um- und durchströmbar ausgebildet sein, so daß die Hydraulikflüssigkeit durch den Druckraum zwischen Primär- und Sekundärkolben hindurchzufließen vermag, ohne daß dabei ein großer Widerstand zu überwinden ist. Zweckmäßig kann hierbei das primärkolbenseitige Verbindungsglied für die Aufnahme eines druckraumseitigen Endes des Primärkolbens, zu dem sich die Aufnahmebohrung des Primärkolbens hin öffnet, einen Topfabschnitt mit einem Boden aufweisen, an dem sich ein von der Hydraulikflüssigkeit durchströmbarer Rohrabschnitt anschließt, über den das primärkolbenseitige Verbindungsglied mit dem sekundärkolbenseitigen Verbindungsglied wirkverbunden ist, um im Ergebnis eine ausreichende Durchströmbarkeit der Fesseleinrichtung zu gewährleisten. Im Hinblick auf eine hinreichende Umströmbarkeit der Fesseleinrichtung kann ferner der Boden des Topfabschnitts wenigstens einen radial außerhalb des Rohrabschnitts angeordneten Durchlaß für den Durchtritt der Hydraulikflüssigkeit aufweisen. Schließlich ist es wiederum einem widerstandsarmen, schnellen Durchfluß der Hydraulikflüssigkeit durch den Druckraum zwischen Primär- und Sekundärkolben förderlich, wenn der Boden des Topfabschnitts eine Mehrzahl von Durchlässen aufweist, die in gleichmäßiger Verteilung um den Rohrabschnitt herum angeordnet sind.

### KURZE BESCHREIBUNG DER ZEICHNUNGEN

Im folgenden wird die Erfindung anhand bevorzugter Ausführungsbeispiele unter Bezugnahme auf die beigefügten, teilweise schematischen Zeichnungen näher erläutert, in denen elastomere Teile zur Vereinfachung der Darstellung im unverformten Zustand gezeigt und gleiche oder entsprechende Teile mit den gleichen Bezugszeichen versehen sind. In den Zeichnungen zeigen:
- Fig. 1: eine prinzipielle Darstellung einer hydraulischen Kraftfahrzeug-Bremsanlage mit zwei Bremskreisen für insgesamt vier Radbremsen, bei der ein erfindungsgemäß ausgebildeter Tandem-Hauptbremszylinder zum Einsatz kommt,
- Fig. 2: eine vergrößerte Längsschnittansicht des Tandem-Hauptbremszylinders gemäß Fig. 1 in seiner unbetätigten Grund- oder Ruhestellung,

- Fig. 3: eine gegenüber der Fig. 2 nochmals vergrößerte Darstellung des Details III in Fig. 2, die ein Zentralventil am Primärkolben des Tandem-Hauptbremszylinders im geöffneten Zustand zeigt,
- Fig. 4: eine gegenüber der Fig. 2 nochmals vergrößerte Darstellung des Details IV in Fig. 2, die ein Zentralventil am Sekundärkolben des Tandem-Hauptbremszylinders im geöffneten Zustand zeigt,
- Fig. 5: eine perspektivische Darstellung des Ventilkörpers des Zentralventils am Sekundärkolben gemäß den Fig. 2 und 4 von schräg vorne,
- Fig. 6: eine perspektivische Darstellung des Ventilkörpers gemäß Fig. 5 von schräg hinten,
- Fig. 7: eine Längsschnittansicht des Ventilkörpers gemäß den Fig. 5 und 6,
- Fig. 8: eine Längsschnittansicht des Ventilkörpers gemäß den Fig. 5 und 6, der gegenüber der Darstellung in Fig. 7 um 90° um seine Mittelachse in der Zeichnungsebene gedreht wurde,
- Fig. 9: eine perspektivische Darstellung der gemäß Fig. 2 zwischen Primär- und Sekundärkolben eingesetzten, aus Kolbendruckfeder und Fesseleinrichtung bestehenden, vormontierten Baugruppe von schräg vorne,
- Fig. 10: eine perspektivische Darstellung der Baugruppe gemäß Fig. 9 von schräg hinten,
- Fig. 11: eine Seitenansicht der Baugruppe gemäß den Fig. 9 und 10,

- Fig. 12: eine perspektivische Darstellung einer Variante des Ventilkörpers gemäß den Fig. 5 bis 8 von schräg vorne,
- Fig. 13: eine perspektivische Darstellung des Ventilkörpers gemäß Fig. 12 von schräg hinten,
- Fig. 14: eine Längsschnittansicht des Ventilkörpers gemäß den Fig. 12 und 13 sowie
- Fig. 15: eine Längsschnittansicht des Ventilkörpers gemäß den Fig. 12 und 13, der gegenüber der Darstellung in Fig. 14 um 90° um seine Mittelachse in der Zeichnungsebene gedreht wurde.

### DETAILLIERTE BESCHREIBUNG DER AUSFÜHRUNGSBEISPIELE

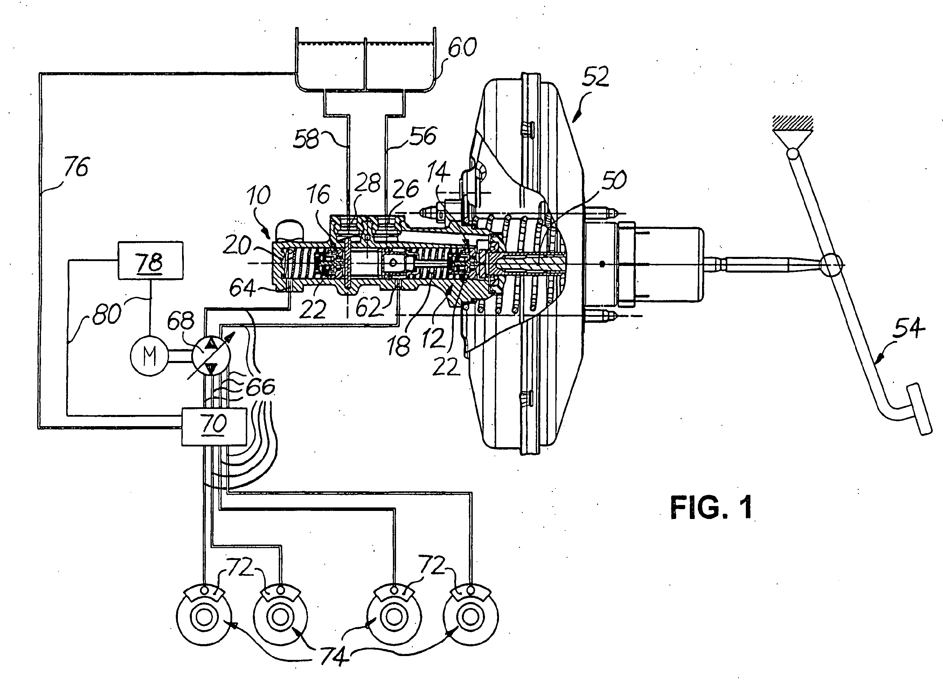

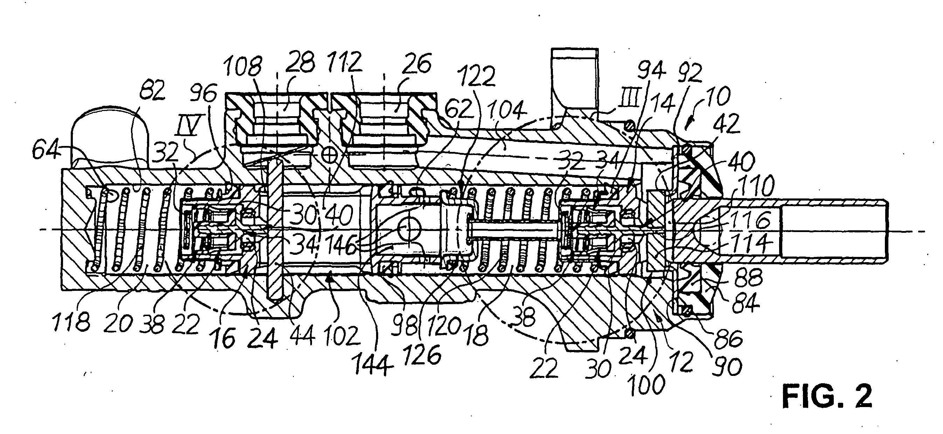

Gemäß Fig. 1 hat eine hydraulische Kraftfahrzeug-Bremsanlage einen in den Fig. 2 bis 4 näher gezeigten Tandem-Hauptbremszylinder 10, der ein Zylindergehäuse 12 aufweist, in dem ein Primärkolben 14 und ein Sekundärkolben 16, auch Zwischenkolben genannt, längsverschieblich geführt sind. Jeder der Kolben 14, 16 dient der variablen Begrenzung jeweils eines Druckraums 18 bzw. 20 und weist ein Zentralventil 22 auf. Das jeweilige Zentralventil 22 ist in der dargestellten Ruhestellung der Kolben 14, 16 geöffnet, um den jeweiligen Druckraum 18 bzw. 20 über einen Kolbenkanal 24 (siehe die Fig. 2 bis 4) im jeweiligen Kolben 14, 16 mit jeweils einem Ausgleichs- und Nachlaufanschluß 26 bzw. 28 zu verbinden, und in einer Betätigungsstellung der Kolben 14, 16 (nicht gezeigt) geschlossen, um besagte Verbindung zu unterbrechen. Hierfür weist jedes Zentralventil 22 gemäß den Fig. 2 bis 4 einen gegen einen Dichtsitz 30 am Kolbenkanal 24 mittels einer Ventilfeder 32 federvorgespannten, am jeweiligen Kolben 14, 16 geführten Ventilkörper 34 mit einem in einer Aufnahmebohrung 36 des jeweiligen Kolbens 14, 16 angeordneten Kopfteil 38 und einem den Kolbenkanal 24 durchgreifenden Ventilstößel 40 auf. Letzter wirkt, wie nachfolgend noch näher erläutert werden wird, mittelbar (am Primärkolben 14) oder unmittelbar (am Sekundärkolben 16) mit einem zylindergehäusefesten Anschlag 42, 44 zusammen, um das Zentralventil 22 in der Ruhestellung des jeweiligen Kolbens 14, 16 offen zu halten. Wesentlich ist, daß, wie nachfolgend ebenfalls noch detaillierter beschrieben werden wird, der Kopfteil 38 des Ventilkörpers 34 als zum jeweiligen Druckraum 18, 20 hin offener Hohlkörper ausgebildet ist, der außenumfangsseitig einen Führungsabschnitt 46 aufweist, über den der Ventilkörper 34 am Innenumfang der Aufnahmebohrung 36 des jeweiligen Kolbens 14, 16 geführt ist, wobei der Ventilkörper 34 zwischen dem Dichtsitz 30 am jeweiligen Kolbenkanal 24 und dem Führungsabschnitt 46 des Kopfteils 38 mit wenigstens einem, im dargestellten Ausführungsbeispiel einer Mehrzahl von Durchlässen 48 versehen ist, über den der jeweilige Druckraum 18, 20 bei geöffnetem Zentralventil 22 mit dem Kolbenkanal 24 im jeweiligen Kolben 14, 16 kommuniziert.

Wie der Fig. 1 des weiteren zu entnehmen ist, greift im montierten Zustand des Tandem-Hauptbremszylinders 10 an dessen Primärkolben 14 ein Stößel 50 als Ausgangsglied eines an sich bekannten und deshalb an dieser Stelle nicht näher beschriebenen Unterdruck-Bremskraftverstärkers 52 betätigungswirksam an, der seinerseits in an sich bekannter Weise manuell über ein Bremspedal 54 betätigt werden kann. Was den hydraulischen Teil der in Fig. 1 gezeigten Kraftfahrzeug-Bremsanlage angeht, ist der Tandem-Hauptbremszylinder 10 eingangsseitig über zwei Ausgleichs- und Nachlaufleitungen 56, 58, von denen die eine (56) an den primärkolbenseitigen Ausgleichs- und Nachlaufanschluß 26 und die andere (58) an den sekundärkolbenseitigen Ausgleichs- und Nachlaufanschluß 28 angeschlossen ist, mit einem Vorratsbehälter 60 für die Hydraulikflüssigkeit verbunden. Ausgangsseitig weist der Tandem-Hauptbremszylinder 10 zwei in Fig. 1 schematisch eingezeichnete Druckanschlüsse 62, 64 auf, von denen der eine (62) mit dem Druckraum 18 zwischen Primärkolben 14 und Sekundärkolben 16 kommuniziert, während der andere (64) in dem Druckraum 20 zwischen Sekundärkolben 16 und Boden des Zylindergehäuses 12 mündet. An die Druckanschlüsse 62, 64 sind Druckleitungen 66 angeschlossen, die über eine mittels eines Elektromotors M antreibbare Hydraulikpumpe 68 und einen an sich bekannten Ventilblock 70 zu hydraulischen Zuspannorganen 72 an den Radbremsen 74 der Kraftfahrzeug-Bremsanlage führen. Die Kreisaufteilung, d.h. die Zuordnung der Zuspannorgane 72 zu den Druckräumen 18, 20 des Tandem-Hauptbremszylinders 10 ist Fachleuten hinreichend bekannt und soll daher an dieser Stelle nicht weiter behandelt werden. Der Ventilblock 70 ist ferner über eine Rücklaufleitung 76 mit dem Vorratsbehälter 60 verbunden. Schließlich ist noch eine Steuereinheit 78 vorgesehen, an die über Steuer- oder Signalleitungen 80 der Elektromotor M und der elektromagnetisch betätigbare Ventilblock 70 angeschlossen sind.

Den Fig. 2 bis 4 sind weitere Details des Tandem-Hauptbremszylinders 10 zu entnehmen. Demgemäß weist das Zylindergehäuse 12 eine sich annähernd über die gesamte Länge des Zylindergehäuses 12 erstreckende Zylinderbohrung 82 mit konstantem Durchmesser auf, in der der Primärkolben 14 und der Sekundärkolben 16 hintereinander angeordnet sind. Das in Fig. 2 nach rechts offene Zylindergehäuse 12 ist durch einen Deckel 84 verschlossen, der gegenüber dem Zylindergehäuse 12 vermittels einer statischen Dichtung in Form eines O-Rings 86 abgedichtet ist. Der Primärkolben 14 erstreckt sich durch eine mittige Öffnung des Deckels 84 in Fig. 2 nach rechts hindurch und ist gegenüber dem Deckel 84 mittels eines Lippenrings 88 dynamisch abgedichtet. Der Deckel 84 hält zugleich eine in Richtung der Zylinderbohrung 82 abgekröpfte Ringscheibe 90 an einer Stufe 92 des Zylindergehäuses 12, wobei die der Zylinderbohrung 82 zugewandte ringförmige Stirnfläche der Ringscheibe 90 den weiter oben bereits angesprochenen Anschlag 42 für den Ventilkörper 34 des Zentralventils 22 am Primärkolben 14 ausbildet.

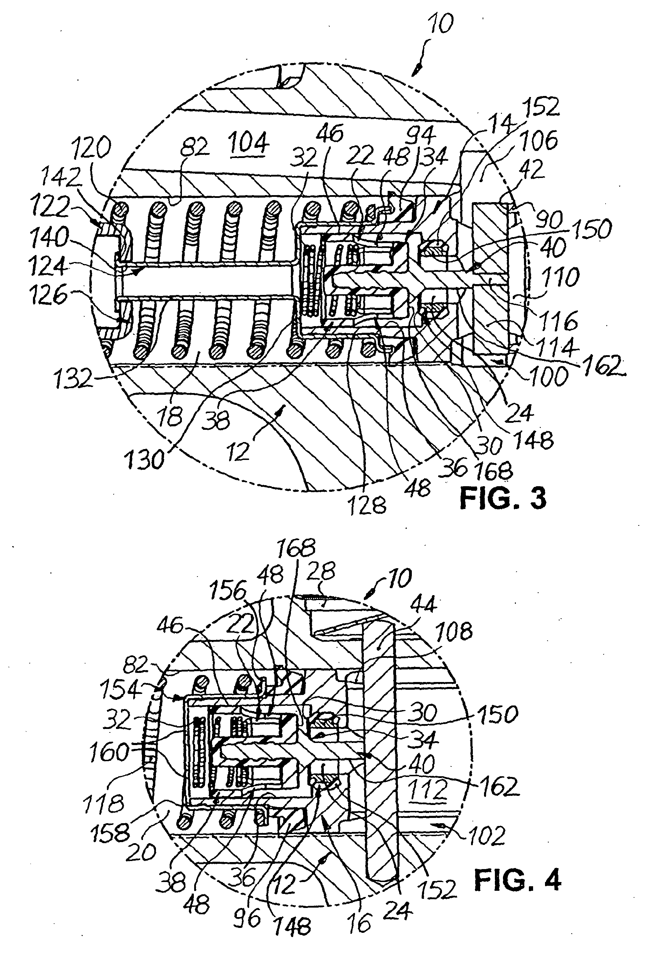

Wie ferner die Fig. 2 zeigt, trägt jeder der Kolben 14, 16 einen Nutring 94 bzw. 96. Der Nutring 94 auf dem Primärkolben 14 dichtet den Druckraum 18 in Fig. 2 nach rechts ab, während der Nutring 96 auf dem Sekundärkolben 16 den Druckraum 20 in Fig. 2 nach rechts abdichtet. Der Sekundärkolben 16 trägt darüber hinaus noch einen Trennutring 98, welcher den Druckraum 18 in Fig. 2 nach links abdichtet. Zwischen dem zylindergehäusefesten Lippenring 88 und dem Nutring 94 auf dem Primärkolben 14 befindet sich ein primärkolbenseitiger Ausgleichs- und Nachlaufbereich 100, während sich zwischen dem Trennutring 98 und dem Nutring 96 auf dem Sekundärkolben 16 ein sekundärkolbenseitiger Ausgleichs- und Nachlaufbereich 102 befindet. Der primärkolbenseitige Ausgleichs- und Nachlaufbereich 100 kommuniziert mit dem Ausgleichs- und Nachlaufanschluß 26 über eine Ausgleichs- und Nachlaufbohrung 104, die bezüglich der Zylinderbohrung 82 schräg, zum Ausgleichs- und Nachlaufanschluß 26 hin ansteigend in das Zylindergehäuse 12 eingebracht ist. Hierbei wird im primärkolbenseitigen Ausgleichs- und Nachlaufbereich 100 die Verbindung zwischen der Zylinderbohrung 82 und der Ausgleichs- und Nachlaufbohrung 104 durch eine weitere Zylinderbohrung 106 (siehe Fig. 3) hergestellt, deren Durchmesser im wesentlichen dem Durchmesser der Zylinderbohrung 82 entspricht und die am vom Druckraum 18 abgewandten, offenen Ende der Zylinderbohrung 82 in das Zylindergehäuse 12 eingebracht ist, und zwar so, daß sie bezüglich der Zylinderbohrung 82 exzentrisch, zum Ausgleichs- und Nachlaufanschluß 26 hin versetzt liegt. Der sekundärkolbenseitige Ausgleichs- und Nachlaufbereich 102 hingegen ist mit dem Ausgleichs- und Nachlaufanschluß 28 über eine Ausgleichs- und Nachlaufbohrung 108 hydraulisch verbunden, die quer zur Zylinderbohrung 82 in das Zylindergehäuse 12 eingebracht ist und in dieser mündet.

Gemäß insbesondere Fig. 2 ist des weiteren sowohl der Primärkolben 14 als auch der Sekundärkolben 16 mit einem Längsschlitz 110 bzw. 112 oder einer Bohrung versehen. Der primärkolbenseitige Längsschlitz 110 wird von einem Querglied 114 durchgriffen, welches mittig an einem Fortsatz 116 des Ventilstößels 40 des Ventilkörpers 34 im primärkolbenseitigen Zentralventil 22 befestigt ist. Mit seinen Enden wirkt das Querglied 114 mit dem Anschlag 42 zusammen, um das Zentralventil 22 in der dargestellten Ruhestellung des Primärkolbens 14 gegen die Kraft der Ventilfeder 32 offen zu halten. Gleichermaßen wird der sekundärkolbenseitige Längsschlitz 112 von einem am Zylindergehäuse 12 angebrachten Querstift durchgriffen, der den Anschlag 44 ausbildet, mit dem das vom Druckraum 20 abgewandte Ende des Ventilstößels 40 des Ventilkörpers 34 im sekundärkolbenseitigen Zentralventil 22 zusammenwirkt, um das Zentralventil 22 in der dargestellten Ruhestellung des Sekundärkolbens 16 gegen die Kraft der Ventilfeder 32 offen zu halten.

Wie den Fig. 2 und 4 zu entnehmen ist, ist im Druckraum 20 eine Kolbendruckfeder 118 angeordnet, die den Sekundärkolben 16 in diesen Figuren nach links vorspannt. Eine weitere Kolbendruckfeder 120, deren Federkraft größer ist als die Federkraft der Kolbendruckfeder 118, befindet sich gemäß den Fig. 2 und 3 im Druckraum 18 zwischen dem Primärkolben 14 und dem Sekundärkolben 16. Die Kolbendruckfeder 120 ist vermittels einer Fesseleinrichtung 122 mit zwei teleskopartig ineinander verschiebbaren Verbindungsgliedern 124, 126 vorgespannt (siehe die Fig. 3).

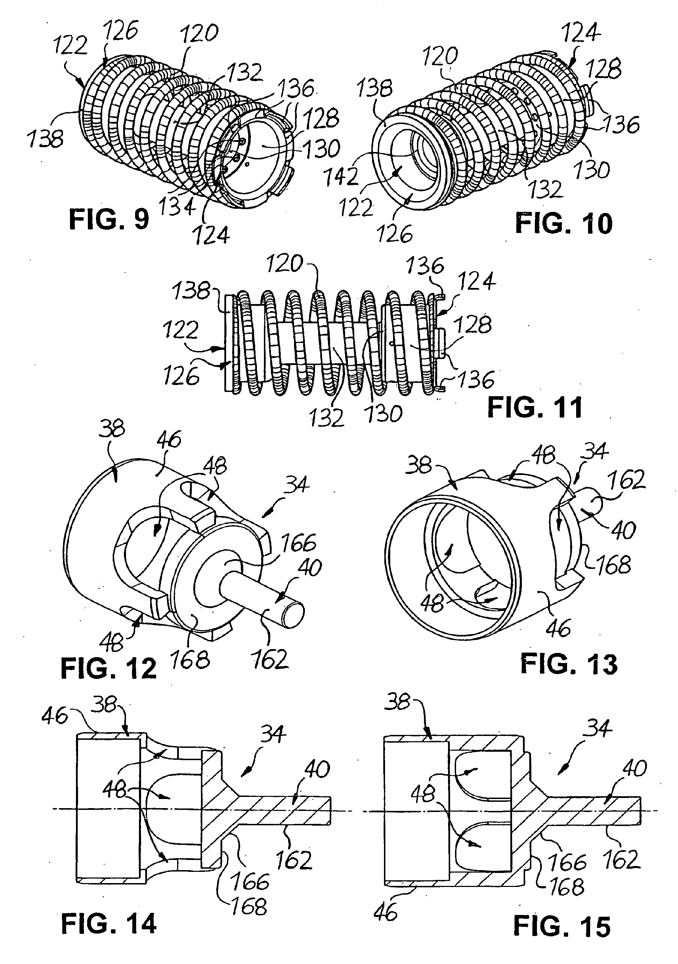

Die aus Kolbendruckfeder 120 und Fesseleinrichtung 122 bestehende, vormontierte Baugruppe ist in den Fig. 9 bis 11 näher gezeigt. Demgemäß ist die Fesseleinrichtung 122 von der Hydraulikflüssigkeit um- und durchströmbar ausgebildet. Genauer gesagt hat das primärkolbenseitige Verbindungsglied 124 zur Aufnahme eines druckraumseitigen Endes des Primärkolbens 14, zu bzw. an dem sich die Aufnahmebohrung 36 des Primärkolbens 14 öffnet, einen Topfabschnitt 128 mit einem Boden 130, an dem sich ein von der Hydraulikflüssigkeit durchströmbarer Rohrabschnitt 132 anschließt, über den das primärkolbenseitige Verbindungsglied 124 mit dem sekundärkolbenseitigen Verbindungsglied 126 wirkverbunden ist. Der Boden 130 des Topfabschnitts 128 weist wenigstens einen, im dargestellten Ausführungsbeispiel eine Mehrzahl von Durchlässen 134 (siehe die Fig. 9) für den Durchtritt der Hydraulikflüssigkeit auf, die radial außerhalb des Rohrabschnitts 132 in gleichmäßiger Verteilung um denselben herum angeordnet sind. An seinem offenen Ende ist der Topfabschnitt 128 des primärkolbenseitigen Verbindungsglieds 124 schließlich mit nach radial außen abgekröpften Laschen 136 versehen, die als Widerlager für die Kolbendruckfeder 120 dienen.

Auch das sekundärkolbenseitige Verbindungsglied 126 ist topfförmig ausgebildet, mit einem dem Sekundärkolben 16 zugewandten Bund 138 als Widerlager für die Kolbendruckfeder 120 und einer Bodenöffnung 140 (siehe die Fig. 3), durch die sich der Rohrabschnitt 132 des primärkolbenseitigen Verbindungsglieds 124 hindurch erstreckt. Hinter der Bodenöffnung 140 ist das primärkolbenseitige Verbindungsglied 124 unter Ausbildung eines Bördels 142 umgebogen, um das primärkolbenseitige Verbindungsglied 124 am sekundärkolbenseitigen Verbindungsglied 126 zu sichern. Aus der vorhergehenden Beschreibung ist ersichtlich, daß die Verbindungsglieder 124, 126 unter Kompression der Kolbendruckfeder 120 teleskopartig ineinander verschiebbar sind.

Im montierten Zustand der aus Kolbendruckfeder 120 und Fesseleinrichtung 122 bestehenden Baugruppe stützt sich gemäß Fig. 2 das sekundärkolbenseitige Verbindungsglied 126 mit seinem Bund 138 am Sekundärkolben 16 ab, wobei der Innenraum des Verbindungsglieds 126 mit einem Hohlraum 144 im Sekundärkolben 16 kommuniziert. Der Hohlraum 144 seinerseits ist über mehrere Öffnungen 146 im Sekundärkolben 16 mit dem Druckraum 18 verbunden.

Den Fig. 4 bis 8 sind weitere Details des Zentralventils 22 im Sekundärkolben 16 zu entnehmen. Da sich das Zentralventil 22 im Primärkolben 14 von dem Zentralventil 22 im Sekundärkolben 16 lediglich darin unterscheidet, daß bei dem Zentralventil 22 im Primärkolben 14 der Ventilstößel 40 des Ventilkörpers 34 den Fortsatz 116 aufweist, mittels dessen der Ventilkörper 34 mit dem Querglied 114 verbunden ist, soll nachfolgend nur das Zentralventil 22 im Sekundärkolben 16 exemplarisch für beide Zentralventile 22 beschrieben werden.

Gemäß Fig. 4 weist der Sekundärkolben 16 ausgehend von seinem in Fig. 4 linken Ende eine Stufenbohrung mit drei Durchmesserstufen auf. Hierbei bildet die Aufnahmebohrung 36 für den Kopfteil 38 des Ventilkörpers 34 die größte Durchmesserstufe aus. Daran schließt sich eine mittlere Durchmesserstufe an, in der ein ringförmiges Einsatzteil 148 eingesetzt ist, mit einem metallischen Kern 150 und einem elastomeren Außenumfangsabschnitt 152, dessen in Fig. 4 linke, dem Druckraum 20 zugewandte Stirnseite den Dichtsitz 30 ausbildet. Die kleinste Durchmesserstufe der Stufenbohrung, deren Durchmesser dem Innendurchmesser des Kerns 150 des Einsatzteils 148 entspricht, begrenzt schließlich zusammen mit dem Kern 150 den zylindrischen Kolbenkanal 24 im Sekundärkolben 16.

Auf das in Fig. 4 linke Ende des Sekundärkolbens 16 aufgesteckt ist ein Topfteil 154 mit einem in Fig. 4 linken Bund 156 und einem in Fig. 4 rechten Boden 158. Der Bund 156 des Topfteils 154 dient zum einen der Begrenzung eines Aufnahmeraums für den Nutring 96 am Sekundärkolben 16, zum anderen als Widerlager für die Kolbendruckfeder 118. Der Boden 158 des Topfteil 154 hingegen bildet ein Widerlager für die Ventilfeder 32 des Zentralventils 22 aus und ist mit mehreren von der Hydraulikflüssigkeit durchströmbaren Öffnungen 160 versehen. Am Primärkolben 14 übernimmt das Verbindungsglied 124 mit seinem Topfabschnitt 128, Boden 130, Durchlässen 134 bzw. Laschen 136 die oben beschriebenen Aufgaben des Topfteils 154.

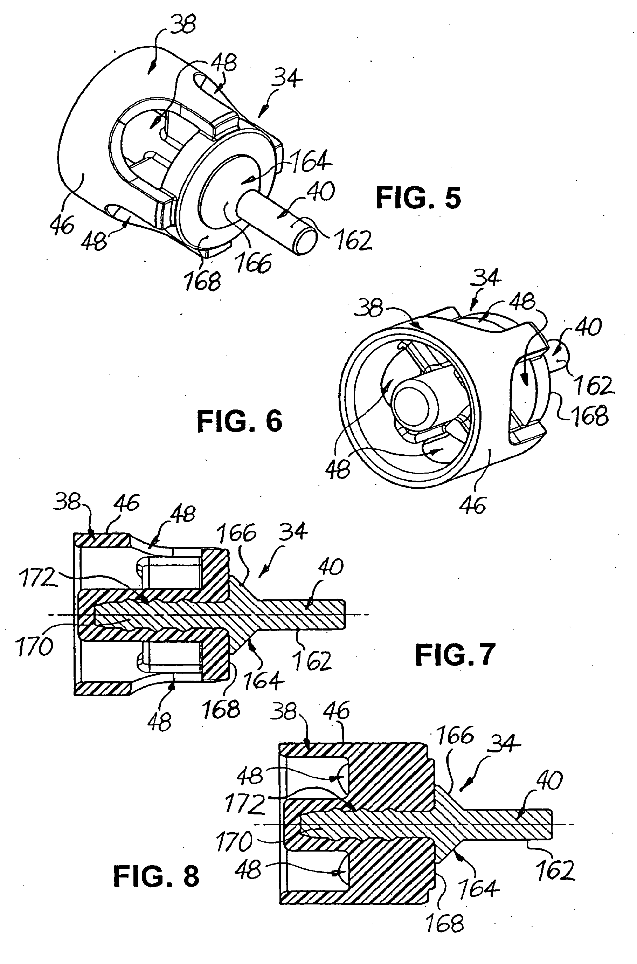

Die Fig. 5 bis 8 zeigen nun weitere Einzelheiten des beim Zentralventil 22 im Sekundärkolben 16 verwendeten Ventilkörpers 34. Demgemäß hat der Ventilstößel 40 des Ventilkörpers 34 einen Schaftabschnitt 162, der einen Kreisquerschnitt aufweist und im montierten Zustand des Ventilkörpers 34 entsprechend Fig. 4 den Kolbenkanal 24 mit radialem Abstand zu dessen Umfangswand durchgreift. Des weiteren weist der Ventilstößel 40 einen an dem Kopfteil 38 des Ventilkörpers 34 angrenzenden Bund 164 mit einer Ableitfläche 166 für die Hydraulikflüssigkeit auf, die stufenlos an dem den Kolbenkanal 24 durchgreifenden Schaftabschnitt 162 des Ventilstößel 40 anschließt und deren Durchmesser sich in Richtung des Kopfteils 38, d.h. im eingebauten Zustand in Richtung des Druckraums 20 vergrößert, z.B. konisch, wie im dargestellten Ausführungsbeispiel.

An die Ableitfläche 166 des Ventilstößels 40 schließt sich der Kopfteil 38 des Ventilkörpers 34 mit einem kreisförmigen Bodenabschnitt 168 an, der im montierten Zustand des Zentralventils 22 mit dem Dichtsitz 30 am Kolbenkanal 24 zusammenwirkt. An den Bodenabschnitt 168 wiederum schließt sich außenumfangsseitig der Führungsabschnitt 46 des Kopfteils 38 an, der dem Bodenabschnitt 168 angrenzend zur Bildung der hier vier Durchlässe 48 teilweise ausgespart ist, welche im dargestellten Ausführungsbeispiel gleichmäßig über dem Umfang des Bodenabschnitts 168 verteilt sind. Wie insbesondere in den Fig. 7 und 8 gut zu erkennen ist, sind die Durchlässe 48 langlochartig ausgebildet und erstrecken sich in axialer Richtung des Ventilkörpers 34 etwas über die halbe Länge des Kopfteils 38, so daß sich hier ein großer, von der Hydraulikflüssigkeit durchströmbarer Querschnitt ergibt.

Im Ausführungsbeispiel gemäß den Fig. 1 bis 11 besteht der Ventilstößel 40 des Ventilkörpers 34 der Zentralventile 22 aus einem metallischen Werkstoff, während der Kopfteil 38 des Ventilkörpers 34 aus einem Kunststoff besteht und an den Ventilstößel 40 angespritzt ist. Hierfür weist der Ventilstößel 40 gemäß insbesondere den Fig. 7 und 8 einen sich annähernd über die gesamte axiale Länge des Kopfteils 38 erstreckenden, an den Bund 164 in Richtung des Kopfteils 38 anschließenden Fortsatz 170 auf, der außenumfangsseitig mit einer geeigneten Profilierung 172 versehen ist, an der der Kopfteil 38 angespritzt ist, um den Kopfteil 38 auch formschlüssig am Ventilstößel 40 zu halten. In einer dazu alternativen Ausgestaltung des Ventilkörpers 34, die in den Fig. 12 bis 15 gezeigt ist, können Kopfteil 38 und Ventilstößel 40 des Ventilkörpers 34 aber auch materialeinheitlich aus einem metallischen Werkstoff hergestellt sein, wobei der Innenraum des Kopfteils 38 frei bleiben kann.

Die vorbeschriebene Kraftfahrzeug-Bremsanlage arbeitet nun wie folgt. In der in Fig. 1 dargestellten Ruhestellung des Tandem-Hauptbremszylinders 10 kommuniziert der Druckraum 18 zwischen dem Primärkolben 14 und dem Sekundärkolben 16 über das vermittels des Anschlags 42 zwangsgeöffnete Zentralventil 22 im Primärkolben 14, die Zylinderbohrung 106 und die Ausgleichs- und Nachlaufbohrung 104 im Zylindergehäuse 12, dessen Ausgleichs- und Nachlaufanschluß 28 sowie die Ausgleichs- und Nachlaufleitung 56 mit dem Vorratsbehälter 60. Hierbei kann die drucklos in der Zylinderbohrung 106 anstehende Hydraulikflüssigkeit durch den Ringquerschnitt des Kolbenkanals 24 vorbei an der Ableitfläche 166 des Ventilstößels 40 und dem Dichtsitz 30 am Einsatzteil 148 in die Aufnahmebohrung 36 für den Kopfteil 38 des Ventilkörpers 34 und von da über die Durchlässe 48 im Kopfteil 38 durch die Durchlässe 134 im Boden 130 des Topfabschnitts 128 bzw. durch den Rohrabschnitt 132 des Verbindungsglieds 124, das Verbindungsglied 126, den Hohlraum 144 im Sekundärkolben 16 und die Öffnungen 146 in den Druckraum 18 nachlaufen. Der Druckraum 20 zwischen dem Sekundärkolben 16 und dem Boden des Zylindergehäuses 12 hingegen steht über das vermittels des Anschlags 44 zwangsgeöffnete Zentralventil 22 im Sekundärkolben 16, die Ausgleichs- und Nachlaufbohrung 108 im Zylindergehäuse 12, dessen Ausgleichs- und Nachlaufanschluß 28 sowie die Ausgleichs- und Nachlaufleitung 58 mit dem Vorratsbehälter 60 in Flüssigkeitsverbindung. Analog der Vorbeschreibung kann hierbei die im Ausgleichs- und Nachlaufbereich 102 drucklos anstehende Hydraulikflüssigkeit durch das geöffnete Zentralventil 22 über die Öffnungen 160 im Topfteil 154 in den Druckraum 20 nachlaufen.

Eine manuelle Betätigung des Bremspedals 54 führt zu einer durch den Unterdruck-Bremskraftverstärker 52 hilfskraftunterstützten oder - bei Ausfall des Unterdruck-Bremskraftverstärkers 52 - nicht-hilfskraftunterstützten Verschiebung des Stößels 50 nach links in Fig. 1. Dies hat eine ebensolche Verschiebung des Primärkolbens 14 zur Folge, wobei das Querglied 114 von dem Anschlag 42 freikommt und die Ventilfeder 32 das Zentralventil 22 im Primärkolben 14 schließt, genauer den Ventilkörper 34 mit dem Bodenabschnitt 168 seines Kopfteils 38 gegen den Dichtsitz 30 am Kolbenkanal 24 drückt. Die Kolbendruckfeder 120 zwischen dem Primärkolben 14 und dem Sekundärkolben 16 ist durch die Fesseleinrichtung 122 so stark vorgespannt, daß die Kolbendruckfeder 120 bei beginnender Bewegung des Primärkolbens 14 wie eine starre Verbindung zwischen Primärkolben 14 und Sekundärkolben 16 wirkt. Infolgedessen bewegt sich der Sekundärkolben 16 zusammen mit dem Primärkolben 14 gegen die Kraft der Kolbendruckfeder 118. Hierbei kommt auch der Ventilstößel 40 des Ventilkörpers 34 des Zentralventils 22 im Sekundärkolben 16 von dem Anschlag 44 frei, so daß die Ventilfeder 32 das Zentralventil 22 im Sekundärkolben 16 wie bei dem Zentralventil 22 im Primärkolben 14 schließt. Im Ergebnis baut sich in beiden Druckräumen 18, 20 gleichzeitig ein hydraulischer Druck auf, der über die Druckanschlüsse 62, 64, die Druckleitungen 66 sowie die unbetätigte Hydraulikpumpe 68 durch den Ventilblock 70 den Zuspannorganen 72 der Radbremsen 74 anlegbar ist. Während die Größe des Ausgleichs- und Nachlaufbereichs 102 am Sekundärkolben 16 bei der Betätigung des Tandem-Hauptbremszylinders 10 im wesentlichen konstant bleibt, wird der Ausgleichs- und Nachlaufbereich 100 am Primärkolben 14 größer, wobei die Hydraulikflüssigkeit über die Ausgleichs- und Nachlaufbohrung 104, den Ausgleichs- und Nachlaufanschluß 26 und die Ausgleichs- und Nachlaufleitung 56 vom Vorratsbehälter 60 nachläuft. Im Falle einer ABS-Regelung kann der an den Zuspannorganen 72 der Radbremsen 74 anstehende hydraulische Druck nun durch geeignete Ansteuerung des Ventilblocks 70 vermittels der Steuereinheit 78 über die Rücklaufleitung 76 in an sich bekannter Weise zum Vorratsbehälter 60 hin entlastet werden.

Wird das Bremspedal 54 entlastet, so werden der Primärkolben 14 und der Sekundärkolben 16 infolge des im Bremssystem vorhandenen hydraulischen Drucks, der auf die jeweilige Kolbenwirkfläche wirkt, und der Kraft der Kolbendruckfeder 118 in ihre Ruhestellung zurückgedrückt. Da die Kolben 14, 16 unter der Wirkung der Kolbendruckfeder 118 schneller in ihre Ruhestellung zurückkehren als die Flüssigkeitssäule aus den Zuspannorganen 72 zurückströmt, entsteht in den Druckräumen 18, 20 ein Unterdruck, wodurch der Ventilkörper 34 des jeweiligen Zentralventils 22 gegen die Kraft der Ventilfeder 32 öffnet. Über die geöffneten Zentralventile 22 kann jetzt Hydraulikflüssigkeit aus den permanent mit dem Vorratsbehälter 60 kommunizierenden Ausgleichs- und Nachlaufbereichen 100, 102 in den jeweiligen Druckraum 18, 20 hinein nachfließen. Nach Beendigung des Nachsaugvorgangs ist die Ruhestellung der Kolben 14, 16 erreicht, die Zentralventile 22 bleiben offen, wie beschrieben.

Kommt es z.B. zu einer Leckage in dem an dem Druckraum 18 angeschlossenen Bremskreis, wird der Primärkolben 14 soweit verschoben, bis der Boden 130 des primärkolbenseitigen Verbindungsglieds 124 an dem von dessen Rohrabschnitt 132 durchgriffenen Boden des sekundärkolbenseitigen Verbindungsglieds 126 zur Anlage gelangt. Der Sekundärkolben 16 wird jetzt mechanisch vom Primärkolben 14 verschoben. In dem funktionsfähigen Bremskreis, der an dem Druckraum 20 angeschlossen ist, kann nun der hydraulische Druck wie bei intakter Bremsanlage aufgebaut werden.

Wenn z.B. durch eine Undichtigkeit in dem an dem Druckraum 20 angeschlossenen Bremskreis im Druckraum 20 kein hydraulischer Druck erzeugt werden kann, wird der Sekundärkolben 16 anfänglich mechanisch dann durch einen geringen hydraulischen Druck im Druckraum 18 soweit verschoben, bis der Boden 158 des Topfteils 154 am Boden des Zylindergehäuses 12 anstößt. Ein Druckaufbau im Druckraum 18 ist nun möglich, weil der Trennutring 98 die beiden Bremskreise voneinander trennt.

Die vorbeschriebene Bremsanlage kann - etwa im Falle einer ESPgeregelten Bremsung - schließlich auch in einem Fremdkraftbetriebsmodus arbeiten, ohne Betätigung des Bremspedals 54 und damit ohne Verschiebung der Kolben 14, 16 im Tandem-Hauptbremszylinder 10. In einem solchen Betriebsmodus wird der Bremsdruck mittels der Hydraulikpumpe 68 erzeugt, die von dem Elektromotor M angetrieben wird, welcher wiederum eine entsprechende Ansteuerung durch die Steuereinheit 78 erfährt. Hierbei wird die Hydraulikflüssigkeit von der Hydraulikpumpe 68 über den Tandem-Hauptbremszylinder 10 aus dem Vorratsbehälter 60 angesaugt. Infolge der beschriebenen Ausgestaltung der Strömungswege im Tandem-Hauptbremszylinder 10, insbesondere der Zentralventile 22, erfährt die Hydraulikflüssigkeit, wenn sie den Tandem-Hauptbremszylinder 10 ausgehend von den Ausgleichs- und Nachlaufanschlüssen 26, 28 durch die geöffneten Zentralventile 22 hindurch zu den Druckanschlüssen 62, 64 hin durchströmt, nur einen sehr geringen Widerstand, so daß sie den Tandem-Hauptbremszylinder 10 schnell zu durchströmen vermag.

Wenngleich das Zentralventil 22 oben an den Kolben eines Tandem-Hauptbremszylinders beschrieben wurde, ist für den Fachmann ersichtlich, daß die beschriebene Ausgestaltung des Zentralventils zur Verringerung des Durchflußwiderstands durch das geöffnete Zentralventil auch an anderen Hydraulikzylindern zum Einsatz kommen kann, z.B. an Einkreis-Hauptbremszylindern.

Es wird ein Hydraulikzylinder offenbart, der wenigstens einen einen Druckraum begrenzenden Kolben mit einem Zentralventil aufweist. Letzteres besitzt einen gegen einen Dichtsitz an einem Kolbenkanal federvorgespannten, am Kolben geführten Ventilkörper mit einem in einer Aufnahmebohrung des Kolbens angeordneten Kopfteil und einem den Kolbenkanal durchgreifenden Ventilstößel, welcher mit einem zylindergehäusefesten Anschlag zusammenwirkt, um das Zentralventil in einer Kolbenruhestellung offen zu halten. Der Kopfteil ist als zum Druckraum offener Hohlkörper ausgebildet, der außenumfangsseitig einen Führungsabschnitt zur Ventilkörperführung am Innenumfang der Aufnahmebohrung hat, wobei der Ventilkörper zwischen dem Dichtsitz und dem Führungsabschnitt mit wenigstens einem Durchlaß versehen ist, über den der Druckraum bei geöffnetem Zentralventil mit dem Kolbenkanal kommuniziert. Im Ergebnis wird ein Hydraulikzylinder geschaffen, dessen Zentralventil im geöffneten Zustand einen verglichen mit dem Stand der Technik deutlich geringeren Durchflußwiderstand aufweist und der somit insbesondere ESPtauglich ist.

### BEZUGSZEICHENLISTE

- 10: Tandem-Hauptbremszylinder
- 12: Zylindergehäuse
- 14: Primärkolben
- 16: Sekundärkolben
- 18: Druckraum
- 20: Druckraum
- 22: Zentralventil
- 24: Kolbenkanal
- 26: Ausgleichs- und Nachlaufanschluß
- 28: Ausgleichs- und Nachlaufanschluß
- 30: Dichtsitz
- 32: Ventilfeder
- 34: Ventilkörper
- 36: Aufnahmebohrung
- 38: Kopfteil
- 40: Ventilstößel
- 42: Anschlag
- 44: Anschlag
- 46: Führungsabschnitt
- 48: Durchlaß
- 50: Stößel
- 52: Unterdruck-Bremskraftverstärker
- 54: Bremspedal
- 56: Ausgleichs- und Nachlaufleitung
- 58: Ausgleichs- und Nachlaufleitung
- 60: Vorratsbehälter
- 62: Druckanschluß
- 64: Druckanschluß
- 66: Druckleitung
- 68: Hydraulikpumpe
- 70: Ventilblock
- 72: Zuspannorgan
- 74: Radbremse

- 76: Rücklaufleitung
- 78: Steuereinheit
- 80: Steuer- oder Signalleitung
- 82: Zylinderbohrung
- 84: Deckel
- 86: O-Ring
- 88: Lippenring
- 90: Ringscheibe
- 92: Stufe
- 94: Nutring
- 96: Nutring
- 98: Trennutring
- 100: Ausgleichs- und Nachlaufbereich
- 102: Ausgleichs- und Nachlaufbereich
- 104: Ausgleichs- und Nachlaufbohrung
- 106: Zylinderbohrung
- 108: Ausgleichs- und Nachlaufbohrung
- 110: Längsschlitz
- 112: Längsschlitz
- 114: Querglied
- 116: Fortsatz
- 118: Kolbendruckfeder
- 120: Kolbendruckfeder
- 122: Fesseleinrichtung
- 124: Verbindungsglied
- 126: Verbindungsglied
- 128: Topfabschnitt
- 130: Boden
- 132: Rohrabschnitt
- 134: Durchlaß
- 136: Lasche
- 138: Bund
- 140: Bodenöffnung
- 142: Bördel
- 144: Hohlraum

- 146: Öffnung
- 148: Einsatzteil
- 150: Kern
- 152: Außenumfangsabschnitt
- 154: Topfteil
- 156: Bund
- 158: Boden
- 160: Öffnung
- 162: Schaftabschnitt
- 164: Bund
- 166: Ableitfläche
- 168: Bodenabschnitt
- 170: Fortsatz
- 172: Profilierung

- M: Elektromotor

## Patentansprüche

1. Hydraulikzylinder, insbesondere Hauptbremszylinder (10) für hydraulische Bremsanlagen, mit einem Zylindergehäuse (12), in dem wenigstens ein Kolben (14, 16) längsverschieblich geführt ist, der einen Druckraum (18, 20) variabel begrenzt und ein Zentralventil (22) aufweist, das in einer Ruhestellung des Kolbens (14, 16) geöffnet ist, um den Druckraum (18, 20) über einen Kolbenkanal (24) mit einem Ausgleichs- und Nachlaufanschluß (26, 28) zu verbinden, und in einer Betätigungsstellung des Kolbens (14, 16) geschlossen ist, um besagte Verbindung zu unterbrechen, wobei das Zentralventil (22) einen gegen einen Dichtsitz (30) am Kolbenkanal (24) federvorgespannten, am Kolben (14, 16) geführten Ventilkörper (34) mit einem in einer Aufnahmebohrung (36) des Kolbens (14, 16) angeordneten Kopfteil (38) und einem den Kolbenkanal (24) durchgreifenden Ventilstößel (40) aufweist, welcher mit einem zylindergehäusefesten Anschlag (42, 44) zusammenwirkt, um das Zentralventil (22) in der Ruhestellung des Kolbens (14, 16) offen zu halten, und wobei der Kopfteil (38) des Ventilkörpers (34) als zum Druckraum (18, 20) offener Hohlkörper ausgebildet ist, der außenumfangsseitig einen Führungsabschnitt (46) aufweist, über den der Ventilkörper (34) am Innenumfang der Aufnahmebohrung (36) des Kolbens (14, 16) geführt ist, **dadurch gekennzeichnet, daß** der Ventilkörper (34) zwischen dem Dichtsitz (30) am Kolbenkanal (24) und dem Führungsabschnitt (46) des Kopfteils (38) mit wenigstens einem Durchlaß (48) versehen ist, über den der Druckraum (18, 20) bei geöffnetem Zentralventil (22) mit dem Kolbenkanal (24) kommuniziert.

2. Hydraulikzylinder nach Anspruch 1, **dadurch gekennzeichnet, daß** der Ventilstößel (40) einen Schaftabschnitt (162) hat, der einen Kreisquerschnitt aufweist und den zylindrischen Kolbenkanal (24) mit radialem Abstand durchgreift.

3. Hydraulikzylinder nach Anspruch 1 oder 2, **dadurch gekennzeichnet, daß** der Kopfteil (38) des Ventilkörpers (34) einen mit dem Dichtsitz (30) am Kolbenkanal (24) zusammenwirkenden, kreisförmigen Bodenabschnitt (168) aufweist, an dem sich außenumfangsseitig der Führungsabschnitt (46) des Kopfteils (38) anschließt, der dem Bodenabschnitt (168) angrenzend zur Bildung einer Mehrzahl von Durchlässen (48) teilweise ausgespart ist.

4. Hydraulikzylinder nach Anspruch 3, **dadurch gekennzeichnet, daß** die Durchlässe (48) gleichmäßig über dem Umfang des Bodenabschnitts (168) verteilt sind.

5. Hydraulikzylinder nach einem der vorhergehenden Ansprüche, **dadurch gekennzeichnet, daß** sich der wenigstens eine Durchlaß (48) in axialer Richtung des Ventilkörpers (34) mindestens über die halbe Länge des Kopfteils (38) erstreckt.

6. Hydraulikzylinder nach einem der vorhergehenden Ansprüche, **dadurch gekennzeichnet, daß** der Ventilstößel (40) einen an dem Kopfteil (38) des Ventilkörpers (34) angrenzenden Bund (164) mit einer Ableitfläche (166) aufweist, die stufenlos an einem den Kolbenkanal (24) durchgreifenden Schaftabschnitt (162) des Ventilstößels (40) anschließt und deren Durchmesser sich in Richtung des Druckraums (18, 20) vergrößert.

7. Hydraulikzylinder nach einem der vorhergehenden Ansprüche, **dadurch gekennzeichnet, daß** Kopfteil (38) und Ventilstößel (40) des Ventilkörpers (34) materialeinheitlich aus einem metallischen Werkstoff hergestellt sind.

8. Hydraulikzylinder nach einem der Ansprüche 1 bis 6, **dadurch gekennzeichnet, daß** der Ventilstößel (40) des Ventilkörpers (34) aus einem metallischen Werkstoff besteht, während der Kopfteil (38) des Ventilkörpers (34) aus Kunststoff besteht und an den Ventilstößel (40) angespritzt ist.

9. Hydraulikzylinder nach Anspruch 8, **dadurch gekennzeichnet, daß** der Ventilstößel (40) mit einer Profilierung (172) versehen ist, an der der Kopfteil (38) angespritzt ist.

10. Hydraulikzylinder nach einem der vorhergehenden Ansprüche, **dadurch gekennzeichnet, daß** der wenigstens eine Kolben (14) in einer ersten Zylinderbohrung (82) des Zylindergehäuses (12) aufgenommen ist, die an ihrem vom Druckraum (18) abgewandten Ende mit dem Ausgleichs- und Nachlaufanschluß (26) über eine zweite Zylinderbohrung (106) verbunden ist, deren Durchmesser im wesentlichen dem Durchmesser der ersten Zylinderbohrung (82) entspricht und die bezüglich der ersten Zylinderbohrung (82) exzentrisch, zum Ausgleichs- und Nachlaufanschluß (26) hin versetzt in das Zylindergehäuse (12) eingebracht ist.

11. Hydraulikzylinder nach einem der vorhergehenden Ansprüche, **dadurch gekennzeichnet, daß** er als Tandem-Hauptbremszylinder (10) ausgebildet ist, mit einem Primärkolben (14), einem Sekundärkolben (16) und einer dazwischen angeordneten Kolbendruckfeder (120), die vermittels einer Fesseleinrichtung (122) mit zwei teleskopartig ineinander verschiebbaren Verbindungsgliedern (124, 126) vorgespannt ist, wobei die Fesseleinrichtung (122) von der Hydraulikflüssigkeit um- und durchströmbar ausgebildet ist.

12. Hydraulikzylinder nach Anspruch 11, **dadurch gekennzeichnet, daß** das primärkolbenseitige Verbindungsglied (124) zur Aufnahme eines druckraumseitigen Endes des Primärkolbens (14), zu dem sich die Aufnahmebohrung (36) des Primärkolbens (14) öffnet, einen Topfabschnitt (128) mit einem Boden (130) aufweist, an dem sich ein von der Hydraulikflüssigkeit durchströmbarer Rohrabschnitt (132) anschließt, über den das primärkolbenseitige Verbindungsglied (124) mit dem sekundärkolbenseitigen Verbindungsglied (126) wirkverbunden ist.

13. Hydraulikzylinder nach Anspruch 12, **dadurch gekennzeichnet, daß** der Boden (130) des Topfabschnitts (128) wenigstens einen radial außerhalb des Rohrabschnitts (132) angeordneten Durchlaß (134) für den Durchtritt der Hydraulikflüssigkeit aufweist.

14. Hydraulikzylinder nach Anspruch 13, **dadurch gekennzeichnet, daß** der Boden (130) des Topfabschnitts (128) eine Mehrzahl von Durchlässen (134) aufweist, die in gleichmäßiger Verteilung um den Rohrabschnitt (132) herum angeordnet sind.

## Claims

1. Hydraulic cylinder, in particular a main brake cylinder (10) for hydraulic braking systems, comprising a cylinder housing (12) in which at least one piston (14, 16) is guided in a longitudinally displaceable manner, said piston variably delimiting a pressure chamber (18, 20) and having a central valve (22) which is open in a rest position of the piston (14, 16) so as to connect the pressure chamber (18, 20) via a piston channel (24) to an equalisation and overrun connection (26, 28) and is closed in an actuating position of the piston (14, 16) so as to interrupt said connection, wherein the central valve (22) has a valve body (34) which is biased by a spring towards a sealing seat (30) on the piston channel (24) and is guided on the piston (14, 16), said valve body having a head part (38) arranged in a receiving bore (36) of the piston (14, 16) and a valve plunger (40) which passes through the piston channel (24), said valve plunger cooperating with a stop (42, 44) on the cylinder housing in order to keep the central valve (22) open in the rest position of the piston (14, 16), and wherein the head part (38) of the valve body (34) is designed as a hollow body which is open towards the pressure chamber (18, 20) and which has on the outer circumference a guide section (46) via which the valve body (34) is guided on the inner circumference of the receiving bore (36) of the piston (14, 16), **characterised in that** the valve body (34) is provided with at least one opening (48) between the sealing seat (30) on the piston channel (24) and the guide section (46) of the head part (38), via which opening the pressure chamber (18, 20) communicates with the piston channel (24) when the central valve (22) is open.

2. Hydraulic cylinder according to claim 1, **characterised in that** the valve plunger (40) has a shaft section (162) which has a circular cross section and passes through the cylindrical piston channel (24) with a radial spacing.

3. Hydraulic cylinder according to claim 1 or 2, **characterised in that** the head part (38) of the valve body (34) has a circular bottom section (168) which cooperates with the sealing seat (30) on the piston channel (24) and which is adjoined on the outer circumference side by the guide section (46) of the head part (38) which is partially cut out next to the bottom section (168) in order to form a plurality of openings (48).

4. Hydraulic cylinder according to claim 3, **characterised in that** the openings (48) are uniformly distributed around the circumference of the bottom section (168).

5. Hydraulic cylinder according to one of the preceding claims, **characterised in that** the at least one opening (48) extends in the axial direction of the valve body (34) at least over half the length of the head part (38).

6. Hydraulic cylinder according to one of the preceding claims, **characterised in that** the valve plunger (40) has a collar (164) adjoining the head part (38) of the valve body (34), said collar having a deflection surface (166) which smoothly adjoins a shaft section (162) of the valve plunger (40) passing through the piston channel (24), the diameter of which deflection surface increases in the direction of the pressure chamber (18, 20).

7. Hydraulic cylinder according to one of the preceding claims, **characterised in that** the head part (38) and the valve plunger (40) of the valve body (34) are of the same material and are made from a metal material.

8. Hydraulic cylinder according to one of claims 1 to 6, **characterised in that** the valve plunger (40) of the valve body (34) is made of a metal material, while the head part (38) of the valve body (34) is made of plastic and is injected onto the valve plunger (40).

9. Hydraulic cylinder according to claim 8, **characterised in that** the valve plunger (40) is provided with a profiling (172) onto which the head part (38) is injected.

10. Hydraulic cylinder according to one of the preceding claims, **characterised in that** the at least one piston (14) is received in a first cylinder bore (82) of the cylinder housing (12), which at its end remote from the pressure chamber (18) is connected to the equalisation and overrun connection (26) via a second cylinder bore (106), the diameter of which substantially corresponds to the diameter of the first cylinder bore (82) and which is formed in the cylinder housing (12) in a manner offset towards the equalisation and overrun connection (26) and eccentrically relative to the first cylinder bore (82).

11. Hydraulic cylinder according to one of the preceding claims, **characterised in that** it is designed as a tandem main brake cylinder (10), with a primary piston (14), a secondary piston (16) and a piston pressure spring (120) arranged therebetween which is prestressed by a shackle device (122) comprising two connecting elements (124, 126) which can be displaced telescopically inside one another, wherein the shackle device (122) is designed such that the hydraulic fluid can flow around it and through it.

12. Hydraulic cylinder according to claim 11, **characterised in that** the connecting element (124) on the primary piston side for receiving a pressure-chamber-side end of the primary piston (14), towards which the receiving bore (36) of the primary piston (14) opens, has a pot-shaped section (128) with a bottom (130) which is adjoined by a tube section (132) through which the hydraulic fluid flows and via which the connecting element (124) on the primary piston side is actively connected to the connecting element (126) on the secondary piston side.

13. Hydraulic cylinder according to claim 12, **characterised in that** the bottom (130) of the pot-shaped section (128) has at least one opening (134) for the passage of the hydraulic fluid, said opening being arranged radially outside the tube section (132).

14. Hydraulic cylinder according to claim 13, **characterised in that** the bottom (130) of the pot-shaped section (128) has a plurality of openings (134) which are distributed uniformly around the tube section (132).

## Revendications

1. Cylindre ou vérin hydraulique, notamment maître-cylindre de freinage (10) pour systèmes de freinage hydrauliques, comprenant un carter de cylindre (12) dans lequel est guidé en coulissement longitudinal, au moins un piston (14, 16) délimitant de manière variable une chambre de pression (18, 20) et présentant une soupape centrale (22), qui, dans une position de repos du piston (14, 16), est ouverte pour relier la chambre de pression (18, 20), par l'intermédiaire d'un canal de piston (24), à un raccord de compensation et d'alimentation (26, 28), et est fermée dans une position d'actionnement du piston (14, 16), la soupape centrale (22) comprenant un corps d'obturation de soupape (34) qui est précontraint par ressort contre un siège d'étanchéité (30) du canal de piston (24) et est guidé dans le piston (14, 16), et qui comprend une partie de tête (38) agencée dans un alésage de réception (36) du piston (14, 16), ainsi qu'un poussoir de soupape (40) traversant le canal de piston (24) et coopérant avec une butée (42, 44) fixe du carter de cylindre pour maintenir ouverte la soupape centrale (22) dans la position de repos du piston (14, 16), et la partie de tête (38) du corps d'obturation de soupape (34) étant réalisée sous forme de corps creux ouvert vers la chambre de pression (18, 20) et présentant du côté périphérique extérieur, un tronçon de guidage (46) par l'intermédiaire duquel le corps d'obturation de soupape (34) est guidé sur la périphérie intérieure de l'alésage de réception (36) du piston (14, 16), **caractérisé en ce que** le corps d'obturation de soupape (34) est pourvu, entre le siège d'étanchéité (30) sur le canal de piston (24) et le tronçon de guidage (46) de la partie de tête (38), d'au moins un passage (48) par l'intermédiaire duquel la chambre de pression (18, 20) communique avec le canal de piston (24) lorsque la soupape centrale (22) est ouverte.

2. Cylindre hydraulique selon la revendication 1, **caractérisé en ce que** le poussoir de soupape (40) comporte un tronçon de tige (162) qui présente une section transversale circulaire et traverse avec espacement radial le canal de piston (24) cylindrique.

3. Cylindre hydraulique selon la revendication 1 ou 2, **caractérisé en ce que** la partie de tête (38) du corps d'obturation de soupape (34) présente un tronçon de fond (168) de forme circulaire, qui coopère avec le siège d'étanchéité (30) sur le canal de piston (24), et auquel se raccorde en périphérie extérieure, le tronçon de guidage (46) de la partie de tête (38), qui, de manière adjacente au tronçon de fond (168), est partiellement évidé, pour former une pluralité de passages (48).

4. Cylindre hydraulique selon la revendication 3, **caractérisé en ce que** les passages (48) sont répartis de manière régulière le long de la périphérie du tronçon de fond (168).

5. Cylindre hydraulique selon l'une des revendications précédentes, **caractérisé en ce que** ledit au moins un passage (48) s'étend, dans la direction axiale du corps d'obturation de soupape (34), sur au moins la moitié de la longueur de la partie de tête (38).

6. Cylindre hydraulique selon l'une des revendications précédentes, **caractérisé en ce que** le poussoir de soupape (40) comporte une collerette (164) adjacente à la partie de tête (38) du corps d'obturation de soupape (34) et présentant une surface de déviation (166) qui se raccorde de manière continue, sans gradin, à un tronçon de tige (162) du poussoir de soupape (40), et dont le diamètre augmente en direction de la chambre de pression (18, 20).

7. Cylindre hydraulique selon l'une des revendications précédentes, **caractérisé en ce que** la partie de tête (38) et le poussoir de soupape (40) du corps d'obturation de soupape (34) sont fabriqués de manière homogène sur le plan de la matière, en un matériau métallique.

8. Cylindre hydraulique selon l'une des revendications 1 à 6, **caractérisé en ce que** le poussoir de soupape (40) du corps d'obturation de soupape (34) est réalisé en un matériau métallique, tandis que la partie de tête (38) du corps d'obturation de soupape (34) est réalisée en matière plastique et est rapportée par moulage par injection sur le poussoir de soupape (40).

9. Cylindre hydraulique selon la revendication 8, **caractérisé en ce que** le poussoir de soupape (40) est pourvu d'un profilage (172) sur lequel est moulée par injection la partie de tête (38).

10. Cylindre hydraulique selon l'une des revendications précédentes, **caractérisé en ce que** ledit au moins un piston (14) est reçu dans un premier alésage cylindrique (82) du carter de cylindre (12), qui, à son extrémité éloignée de la chambre de pression (18), est relié au raccord de compensation et d'alimentation (26), par l'intermédiaire d'un deuxième alésage de cylindre (106) dont le diamètre correspond sensiblement au diamètre du premier alésage de cylindre (82) et qui, par rapport au premier alésage de cylindre (82), est réalisé de manière excentrée dans le carter de cylindre (12), en étant décalé vers le raccord de compensation et d'alimentation (26).

11. Cylindre hydraulique selon l'une des revendications précédentes, **caractérisé en ce qu'**il est réalisé en tant que maître-cylindre de freinage en tandem (10) comprenant un piston primaire (14), un piston secondaire (16), et, agencé entre ceux-ci, un ressort de compression de piston (120) qui est précontraint au moyen d'un dispositif de blocage de retenue avec deux organes de liaison (124, 126) pouvant coulisser l'un dans l'autre de manière télescopique, le dispositif de blocage de retenue (122) pouvant être traversé et contourné par l'écoulement de fluide hydraulique.

12. Cylindre hydraulique selon la revendication 11, **caractérisé en ce que** l'organe de liaison (124) situé du côté piston primaire, présente, en vue de recevoir une extrémité du piston primaire (14), située côté chambre de pression, vers laquelle s'ouvre l'alésage de réception (36) du piston primaire (14), un tronçon en coupelle (128) avec un fond (130), auquel se raccorde un tronçon tubulaire (132) pouvant être traversé par l'écoulement de fluide hydraulique et par lequel l'organe de liaison (124) situé côté piston primaire, est lié de manière active à l'organe de liaison (126) situé côté piston secondaire.

13. Cylindre hydraulique selon la revendication 12, **caractérisé en ce que** le fond (130) du tronçon en coupelle (128) présente au moins un passage (134) agencé radialement à l'extérieur du tronçon tubulaire (132), pour le passage du fluide hydraulique.

14. Cylindre hydraulique selon la revendication 13, **caractérisé en ce que** le fond (130) du tronçon en coupelle (128) présente une pluralité de passages (134) qui sont agencés selon une répartition régulière autour du tronçon tubulaire (132).
